# EUROPEAN PATENT APPLICATION

(11) **EP 0 893 236 A1**
(43) Date of publication of application: **27.01.1999**
(21) Application number: 98305820.7
(22) Date of filing: 21.07.1998
(51) Int. Cl.: B29C 73/22

(54) **Self-sealing tyre and method of making the same**

(30) Priority: 22.07.1997 JP 195846/97
(71) Applicant: SUMITOMO RUBBER INDUSTRIES LTD., Hyogo-ken (JP)
(72) Inventor: Igarashi, Yasuo, Kawanishi-shi, Hyogo-ken (JP); Nakano, Kunihiko, Akashi-shi, Hyogo-ken (JP)
(74) Representative: Stewart, Charles Geoffrey

(57) **Abstract**

A self-sealing tyre comprises a toroidal main body, an inner liner (6) of a gas-impermeable rubber covering the inside of the toroidal main body, a self-sealing layer (12) disposed inside the inner liner, and a packing layer (11) covering the inside of the self-sealing layer, where the thickness of the self-sealing layer is 1.0 to 5.0 mm. The self-sealing layer (12) is made of a thermoplastic polymer having a shape retaining nature at normal temperature. The packing layer (11) is made a rubber compound such as butyl rubber or diene rubber such as styrene butadiene rubber.

## Description

The present invention relates to a pneumatic tyre, more particularly to a self-sealing tyre and a method of making the same in which the self-sealing performance and weight balance are improved.

To self-seal tyre punctures, a sticky rubber layer disposed along the inside of the tyre has been proposed. Such a rubber layer had a thickness of at least 7 mm to obtain even a minimal sealing effect. However, when the sticky rubber is thick, the tyre is liable to lose its weight balance especially during high speed rotation. Further, if the tyre inside becomes moistened during long time use, the layer becomes liable to separate from the inside of the tyre little by little, which further worsens the tyre balance.

It is therefore, an object of the present invention to provide a self-sealing tyre and a method of making the same, in which the self-sealing effect, the weight balance and the resistance to moisture are improved.

According to one aspect of the present invention, a self-sealing tyre comprises a toroidal main body, an inner liner of a gas-impermeable rubber covering the inside of the toroidal main body, a self-sealing layer disposed inside the inner liner to cover at least the inside of a tread portion, a packing layer disposed on the inside of the self-sealing layer to cover the self-sealing layer, and the thickness of the self-sealing layer being 1.0 to 5.0 mm.

Accordingly, the packing layer which is disposed inside the self-sealing layer and pressed by the tyre air pressure pushes the self-sealing layer into punctures. Therefore, the self-sealing effect can be obtained in spite of the considerably decreased thickness compared to the prior art. Further, as the weight of the self-sealing layer is decreased, the weight balance is improved, and vibration during high speed running is be prevented. Furthermore, as the self-sealing layer is covered by the packing layer, separation due to moisture is prevented and the packing layer prevents the surface of the self-sealing layer from undulating. It becomes possible to use a gel as the self-sealing layer. Thus the improved weight balance and self-sealing effect can be maintained for a long time.

Embodiments of the present invention will now be described in detail in conjunction with the accompanying drawings:
Fig.1 is s cross sectional view of a tyre according to the invention;
Fig.2 is an enlarged cross sectional view showing a part of the self-sealing layer and packing layer;
Figs.3-6 are views for explaining a method of making the tyre shown in Fig.1;
Fig.7 is a cross sectional view of a tyre according to the invention; and
Fig.8A and 8B are views for explaining a method of making the tyre shown in Fig.7.

The pneumatic tyre according to the present invention comprises a tread portion 2, a pair of axially spaced bead portions 4 each with a bead core 10 therein, a pair of sidewall portions 3 extending between the tread edges Te and the bead portions 4, a carcass 8 extending between the bead portions 4, an inner liner 6 disposed inside the carcass 8, and a self-sealer 7 disposed inside the inner liner 6 in at least the tread portion 2.

The carcass 8 comprises at least one ply of cords extending between the bead portions 4 through the tread portion 2 and sidewall portions 3 and turned up around the bead cores 10 to be secured thereto. In the case of a radial tyre, the carcass cord angle is usually 70 to 90 degrees, and in the case of a bias tyre, the carcass cord angle is usually 35 to 70 degrees with respect to the tyre circumferential direction.

In order to reinforce the tread portion 2, a belt 9 is disposed radially outside the carcass 8, the belt comprising at least one cord ply of which cord angle is 0 to 70 degrees with respect to the tyre circumferential direction.

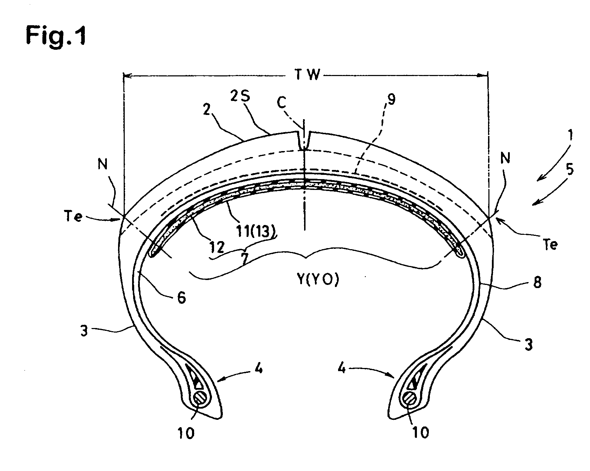

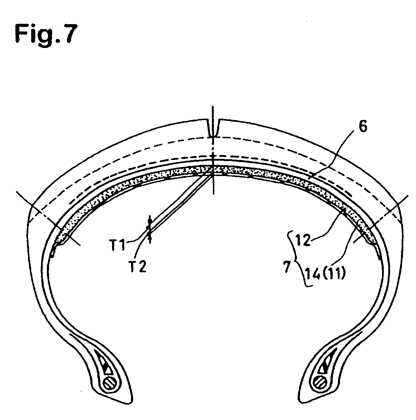

Embodiments shown in Figs.1 and 7 are a motorcycle tyre the tread portion 2 of which is curved at a relatively small radius of curvature so as to have a convex profile 2S which curves continuously from one of the tread edges Te to the other, and the tyre maximum width TW lies between the tread edges Te in the normal inflated state of the tyre. As a result, in the tread portion 2, the carcass 7 and belt 9 are curved similarly to the tread face 2S. The normal inflated state is when the tyre is mounted on a standard rim and inflated to a standard inner pressure. The standard rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tyre Load Limits at Various Cold Inflation Pressures" table in TRA or the like.

The inner liner 6 is made of a gas-impermeable rubber such as butyl rubber, halogenated butyl rubber or the like, and is disposed on the inside of the carcass 8 to cover the whole area thereof. The thickness thereof is a substantially constant value in the range of from 0.5 to 2.0 mm.

The self-sealer 7 comprises a self-sealing layer 12 and a packing layer 11 covering the inside of the self-sealing layer 12.

The self-sealing layer 12 extends over at least the tread inside region Y. In this invention, the tread inside region Y is defined between two straight lines N normal to the tread face 2S one drawn at each tread edge Te.

The self-sealing layer 12 is made of a 'soft thermoplastic polymer having a shape retaining nature at normal temperatures of 20 degrees C. As the viscosity thereof is decreased by the heat generated during running, the self-sealing effect is then further improved.

For the self-sealing layer 12, polymers having no additive therein and having a Mooney viscosity ML1+4 of from 20 to 60 at 100 degrees C, for example, diene rubber polymers such as butadiene, isoprene, styrene-butadiene and the like and olefin (styrene) rubber polymers such as a copolymer of polyethylene and styrene can be used.

Further, a gel having a 100% modulus of not more than 0.5 kgf/sq.cm or a JIS-A hardness of not more than 12 degrees is preferably used because such a gel has a suppleness like a liquid in which no stress is produced whereas it is a solid at normal temperature. For example, a gel of diene rubber polymer or olefin rubber polymer and paraffin oil dispersed therein can be used. Especially, a gel (PE gel) of olefin rubber polymer and paraffin oil is preferable because of its excellent sealing effect and durability against cyclic compressive and tensile stresses.

In addition to the above, various thermoplastic polymers which can seal punctures in a temperature range of from -10 to 130 degrees C may be used.

The thickness T1 of the self-sealing layer 12 is in the range of from 1.0 to 5.0 mm, preferably 1.0 to 3.0 mm at the tyre equator under the standard state. If the thickness T1 is less than 1.0 mm, a sufficient self-sealing effect can not be obtained. If the thickness T1 is more than 5.0 mm, the tyre weight balance is liable to become worse.

The above-mentioned packing layer 11 is made of a rubber compound which adheres to the inner liner 6 by the heat applied during vulcanising the tyre. In this example, a butyl rubber which is the same as the inner liner is used. However, a rubber which is the same as the carcass cord topping rubber for example a diene rubber such as styrene butadiene rubber may be used. The rubber of the packing layer 11 has various additives therein which are well known in the art such as carbon black and the like in contrast to the rubber polymers of the self-sealing layer.

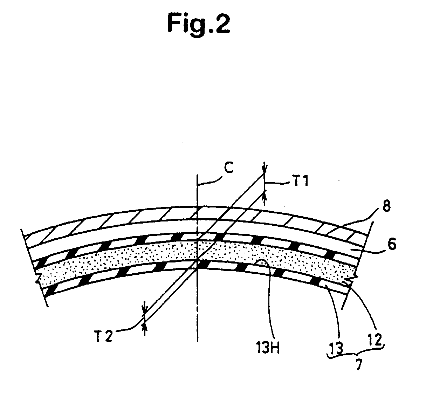

In the embodiment shown in Figs.1-6, the packing layer 11 is an annular tube 13 which is filled with the above-mentioned self-sealing layer 12. The tube 13 is disposed flat on the inside of the inner liner 6 in the tread portion 2. Thus, on the inside of the carcass, there are at least four layers, the inner liner 6, the radially outer part of the packing layer 11, the self-sealing layer 12 and the radially inner part of the packing layer 11.

The annular tube 13 has a substantially constant thickness and the thickness T2 at the tyre equator is 0.5 to 2.0 mm preferably 1.0 to 1.5 mm under the normal inflated state. If the thickness is less than 0.5 mm, the strength decreases, and it is difficult to make the self-sealing layer 12 uniform. If the thickness is more than 2.0 mm, the tyre weight undesirably increases and the weight balance is liable to be disturbed. The annular tube 13 in this example is endless in the circumferential direction. Thus, the self-sealing layer 12 therein is also endless. However, it is also possible to block the tube at one or more positions 13e to control an excessive flow of the self-sealing layer 12 when softened during running.

In the embodiment shown in Figs.7-8, the packing layer 11 is a sheet 14 of rubber the axial edges of which are adhered to the inside of the inner liner 6, and the self-sealing layer 12 is disposed between the inner liner 6 and the packing layer 11. Thus, on the inside of the carcass, there are at least three layers, the inner liner 6, the self-sealing layer 12 and the packing layer 11.

The rubber sheet 14 has a substantially constant thickness and the thickness T2 at the tyre equator is 0.5 to 1.5 mm preferably 0.5 to 1.0 mm. In this case, the total thickness (T1+T2) of the self-sealer 7 decreases in comparison with the tube 13. Thus, it becomes possible to further improve the weight balance. In this example, the annular space between the sheet 14 and inner liner 6 is endless in the circumferential direction. Thus, the self-sealing layer 12 therein is also endless. However, it is also possible to block the space at one or more circumferential positions to control an excessive flow of the self-sealing layer 12 soften during running.

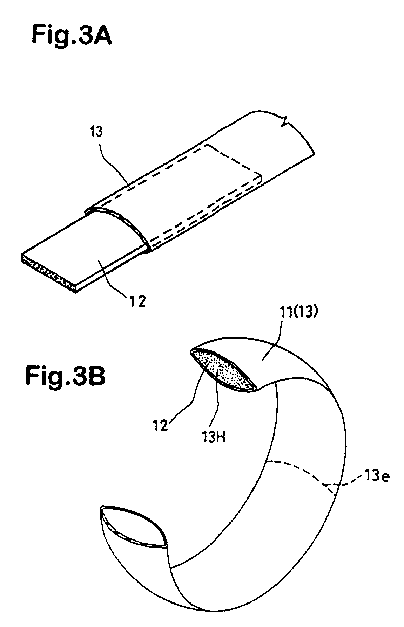

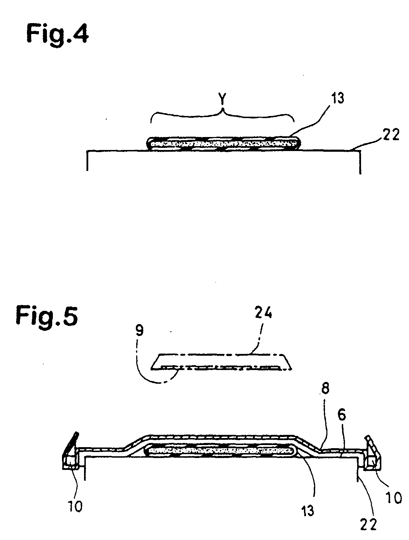

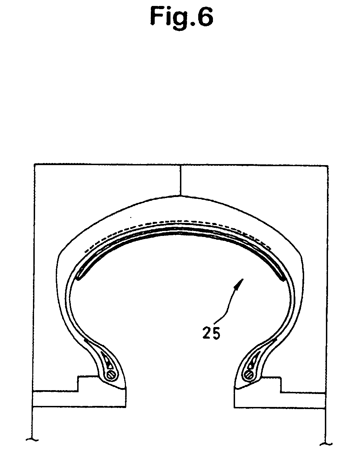

To be brief, the former tyre can be manufactured by the following steps, for example,
inserting the self-sealing layer 12 in the tube 13 (Fig.3A),
cutting the tube 13 into a predetermined length,
winding the tube 13 around a building drum 22 (Fig.4),
connecting the cut ends 13e of the tube 13 to make it an annular tube (Fig.3B),
applying the inner liner 6, the carcass 8 (Fig.5),
winding the bead cores 10 (Fig.5),
applying rubber bead apexes (Fig.5),
making an assembly 24 of a tread rubber and the belt 9 (Fig.5),
placing the assembly 24 around the carcass 8 on the drum 22 (Fig.5),
expanding the drum 22 to fit the carcass crown to the tread assembly 24,
vulcanising the raw tyre 25 in a mould (Fig.6).

Preferably, the tube is wound around the building drum 22 in an unvulcanised state. However, it is possible to wind the vulcanised tube.

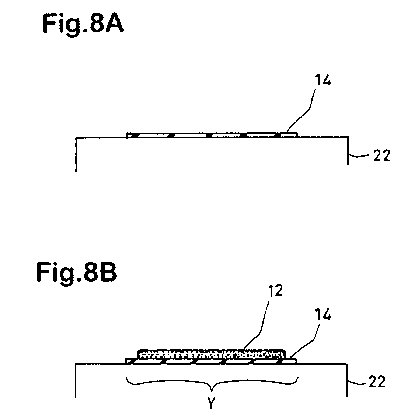

The later tyre can be manufactured by the following steps, for example,
winding a rubber sheet 14 around a building drum 22 (Fig.8A),
applying the self-sealing layer 12 on the rubber sheet 14 (Fig.8B),
applying the inner liner 6 and carcass 8,
winding the bead cores 10,
applying rubber bead apexes,
making an assembly of a tread rubber and belt 9,
placing the tread assembly around the carcass 8 on the drum 22,
expanding the drum 22 to fit the carcass crown to the tread assembly,
vulcanising the raw tyre in a mould.

In any case, it is possible to apply the belt and tread rubber around the carcass on the expanded drum in the case of a radial tyre. In the case of a bias tyre, it is also possible to apply the tread rubber and optional belt around the carcass on the contracted drum before expanding the drum.

### Comparison Tests

Motorcycle tyres of size 3.00-10 having the same structure shown in Fig.1 except for the self-sealer were made and tested for the self-sealing performance and weight balance. In the results the higher the point the better the performance.

The specifications of the tyres and test results are shown in Table 1.

### Self-sealing Test

The test tyres were inflated to standard pressure and the tread portion was punctured by nails. Then the tyres were run for 5000 km using a drum to measure any decrease in air pressure after running compared to the air pressure before running. In Table 1, the decrease is indicated by a five point method.

### Weight Balance Test

The test tyres were mounted on the front and rear wheels of a motor scooter (100cc), and the magnitude of vibrations when the running speed was increased to 100 km/h was evaluated into five ranks by the test rider's feelings.

Air pressure: front=125 kpa, rear=175 kpa

Tyre load: front=70 kg, rear=85 kg

**Table 1**

| Tyre | Ex.1 | Ex.2 | Ex.3 | Ex.4 | Ref.1 | Ref.2 |
|---|---|---|---|---|---|---|
| Self-sealing layer Material | BR (no additive) | PE gel | PE gel | PE gel | PE gel | PE gel |
| Thickness T1 (mm) | 3 | 3 | 1 | 5 | 0.5 | 7 |
| Annular tube Material | IIR | IIR | IIR | IIR | IIR | IIR |
| Thickness T2 (mm) | 1.5 | 1.5 | 1.5 | 1.5 | 1.5 | 1.5 |
| Test Results Self-seal | 4 | 4 | 3.5 | 4 | 2 | 5 |
| High speed balance | 4 | 4 | 5 | 3.5 | 5 | 2 |

From the tests, it was confirmed that example tyres 1 to 4 were improved in self-sealing performance and tyre weight balance at the same time in contrast to the reference tyres 1 and 2 wherein the self-sealing performance and the tyre weight balance were antinomic.

The present invention can be applied to various tyres, for example, passenger car tyres, heavy duty tyres for trucks, buses and the like, in addition to the motorcycle tyres.

## Claims

1. A self-sealing tyre comprising a toroidal main body, an inner liner (6) of a gas-impermeable rubber covering the inside of the toroidal main body, characterised by a self-sealing layer (12) disposed inside the inner liner (6) to cover at least the inside of a tread portion (25), and a packing layer (11) covering the inside of the self-sealing layer (12), the self-sealing layer (12) having a thickness of 1.0 to 5.0 mm.

2. A self-sealing tyre according to claim 1, characterised in that the self-sealing layer (12) is made of a thermoplastic polymer having a shape retaining nature at normal temperature.

3. A self-sealing tyre according to claim 2, characterised in that the thermoplastic polymer is a gel satisfying at least one of the following conditions (a) and (b):
(a) the 100% modulus is not more than 0.5 kgf/sq.cm;
(b) the JIS-A hardness is not more than 12 degrees.

4. A self-sealing tyre according to claim 2, characterised in that the thermoplastic polymer is a rubber polymer having no additive therein and having a Mooney viscosity of 20 to 60 at 100 degrees C.

5. A self-sealing tyre according to claim 1, 2, 3 or 4, characterised in that the packing layer (11) is made a rubber compound such as butyl rubber or diene rubber such as styrene butadiene rubber.

6. A self-sealing tyre according to claim 1, 2, 3 or 4, characterised in that the packing layer (11) is made a rubber compound such as butyl rubber or diene rubber such as styrene butadiene rubber, and the thickness of the packing layer is 0.5 to 2.0 mm.

7. A self-sealing tyre according to any of claims 1 to 4, characterised in that the packing layer (11) is made of the same rubber as the inner liner.

8. A self-sealing tyre according to any of the preceding claims, characterised in that the packing layer (11) is an annular tube (13), and the self-sealing layer is inside the annular tube (13).

9. A method of making the tyre as claimed in claim 8 by vulcanising the raw tyre in a mould, characterised in that the improvements comprise the steps of inserting the self-sealing layer (12) in the tube (13), setting the tube (13) around a tyre building drum, and applying the inner liner (6) around the tube on the drum.
